# FASCICULE DE BREVET EUROPEEN

(11) **EP 3 057 773 B1**
(45) Date de publication et mention de la délivrance du brevet: **15.01.2020**
(21) Numéro de dépôt: 14799191.3
(22) Date de dépôt: 13.10.2014
(51) Int. Cl.: B29C 65/54, F02K 9/36, B29L 31/30

(54) **PROCÉDÉ DE LIAISON D'UNE JUPETTE A UNE ENVELOPPE D'UN CORPS DE PROPULSEUR**
VERFAHREN ZUM VERBINDEN EINER SCHÜRZE MIT EINEM MOTORBLOCKGEHÄUSE
METHOD FOR CONNECTING A SKIRT TO AN ENGINE BODY CASING

(30) Priorité: 16.10.2013 FR 1360077
(43) Date de publication de la demande: 24.08.2016
(73) Titulaire: ARIANEGROUP SAS, 75015 Paris (FR)
(72) Inventeur: BOURY, Didier, F-33160 Saint Medard en Jalles (FR); REY, Jacques, F-33700 Merignac (FR); BERNARD, Romain, F-33160 Saint Medard en Jalles (FR); AYMONIER, Agnès, F-33130 Begles (FR)
(74) Mandataire: Cabinet Beau de Loménie
(86) Numéro de dépôt international: PCT/FR2014/052596
(87) Numéro de publication internationale: WO 2015/055928

(56) Documents cités:
- EP-A1- 0 354 692
- WO-A2-98/46960
- WO-A2-2004/085252
- FR-A- 1 546 218
- FR-A1- 2 606 082

## Description

### Arrière-plan de l'invention

L'invention concerne un corps de propulseur de moteur à propergol solide, notamment pour lanceur ou missile.

Un tel corps de propulseur comprend une enveloppe destinée à renfermer le propergol et soumise à une forte pression interne lors du fonctionnement du moteur, l'enveloppe étant aussi parfois désignée par capacité pressurisée. L'enveloppe comprend une partie centrale, ou virole, sensiblement cylindrique, prolongée à ses extrémités par un fond avant et un fond arrière formant une seule pièce avec la virole. L'enveloppe est typiquement formée par bobinage filamentaire sur mandrin en utilisant un fil carbone pré-imprégné de résine, par exemple époxy. Une protection thermique et éventuellement un liner peuvent être prévus du côté intérieur de l'enveloppe.

Des embases polaires avant et arrière facilitent le bobinage filamentaire au niveau des fonds et servent au montage d'un allumeur de propulseur et d'une tuyère.

Des jupettes avant et arrière sont fixées sur des parties d'extrémité de la virole et entourent au moins partiellement les fonds avant et arrière. Les jupettes permettent l'intégration du moteur dans le véhicule (lanceur ou missile), la transmission des efforts de poussée vers le véhicule et la reprise de sollicitations en provenance du véhicule.

Une difficulté rencontrée lors de la fabrication d'un tel corps de propulseur réside dans la réalisation d'un bon assemblage entre enveloppe et jupettes, surtout pour un corps de propulseur de grand diamètre dont l'enveloppe présente d'inévitables irrégularités de géométrie.

Le document WO 2004/085252 décrit la liaison d'une jupette sur un corps de propulseur à l'aide d'un adhésif élastomérique.

### Résumé de l'invention

Pour résoudre une telle difficulté, l'invention propose un procédé pour relier une partie terminale d'une jupette à une enveloppe d'un corps de propulseur au voisinage d'un fond de l'enveloppe, la jupette ayant une partie libre s'étendant à partir de sa partie terminale pour entourer au moins partiellement ledit fond selon la revendication 1. Le procédé comprend :
- l'amenée de la partie terminale de la jupette préfabriquée avec jeu circonférentiel autour de l'enveloppe du corps de propulseur au voisinage dudit fond,
- le maintien de la jupette en position par rapport à l'enveloppe du corps de propulseur,
- la fermeture à ses deux extrémités d'un espace annulaire entre la partie terminale de la jupette et l'enveloppe du corps de propulseur,
- l'injection d'élastomère dans ledit espace annulaire, et
- la réticulation de l'élastomère.

Un tel procédé présente plusieurs avantages.

Un très bon centrage de la jupette par rapport à l'enveloppe peut être obtenu même en présence d'irrégularités géométriques de l'enveloppe ou de la jupette, l'injection de l'élastomère permettant de compenser ces irrégularités, ce qui ne pourrait être obtenu avec une cale d'élastomère préfabriquée.

La jupette et l'enveloppe sont réalisées séparément, ce qui permet de réduire le temps d'utilisation de l'installation de bobinage de l'enveloppe en comparaison avec la réalisation d'une jupette in-situ par drapage de plis pré-imprégnés sur l'enveloppe bobinée et sur un outillage de soutien de la partie libre de la jupette.

La jupette est exempte de plis ou autres défauts tels que ceux qui pourraient résulter d'un drapage directement sur l'enveloppe ou d'un collage sur une cale élastomère préfabriquée, en raison de défauts géométriques.

La qualité de l'assemblage permet de faire l'économie d'un sur-bobinage de la jupette après sa mise en place sur l'enveloppe.

L'injection d'élastomère peut être réalisée à travers un outillage fermant une extrémité dudit espace annulaire et/ou à travers la partie terminale de la jupette.

L'injection d'élastomère peut être réalisée en reliant l'espace annulaire à une source de vidé à travers un outillage fermant une extrémité de l'espace annulaire et/ou à travers la partie terminale de la jupette.

L'injection peut être réalisée en maintenant l'enveloppe du corps de propulseur sensiblement verticale ou horizontale.

Selon une particularité du procédé, celui-ci comprend en outre le dépôt d'adhésif sur des faces en regard de la partie terminale de la jupette et de l'enveloppe du corps de propulseur, avant injection de l'élastomère.

Lorsqu'une élévation de la température est nécessaire ou souhaitée pour réaliser la réticulation de l'élastomère, cela peut être obtenu au moyen d'un élément chauffant disposé du côté extérieur de la partie terminale de la jupette.

### Brève description des dessins

- la figure 1 est une vue en demi-coupe axiale d'un corps de propulseur pour moteur à propergol solide; et
- les figures 2A, 2B, 2C et 2D sont des vues partielles en coupe montrant très schématiquement des étapes successives d'un mode de mise en œuvre d'un procédé selon l'invention.

### Description détaillée d'un mode de réalisation de l'invention

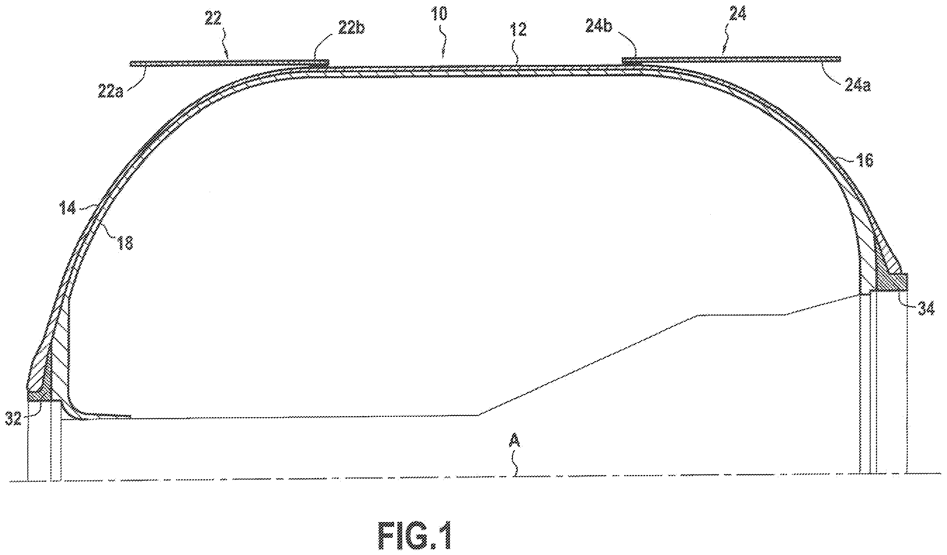

La figure 1 montre un corps de propulseur de moteur à propergol solide comprenant une enveloppe 10, des jupettes avant et arrière 22 et 24 et des embases polaires avant et arrière 32 et 34.

L'enveloppe 10, ayant une forme axisymétrique d'axe A, comprend une partie centrale ou virole sensiblement cylindrique 12 et des fonds avant 14 et arrière 16. L'enveloppe 10 est formée par exemple par bobinage filamentaire et définit le logement pour le propergol solide. La surface interne de l'enveloppe 10 est munie d'un revêtement de protection thermique 18. Un liner peut en outre être prévu.

Les embases polaires 32 et 34 permettent le montage d'un allumeur du moteur et d'une tuyère (non représentés) et contribuent à faciliter le bobinage filamentaire de l'enveloppe 10 au niveau des fonds 12 et 14.

Comme indiqué plus haut, les jupettes 22, 24, de forme sensiblement annulaire, permettent de relier mécaniquement le corps de propulseur à d'autres parties du véhicule (par exemple lanceur ou missile) équipé du moteur. Chaque jupette a une partie terminale 22b, 24b solidarisée avec l'enveloppe 10 au voisinage du fond correspondant et une partie libre 22a, 24a qui s'étend à partir de la partie terminale en entourant au moins partiellement ce fond. Par partie libre, on entend ici une partie qui n'est pas directement fixée sur l'enveloppe.

Un corps de propulseur tel que brièvement décrit ci-avant et représenté sur la figure 1 est bien connu en soi.

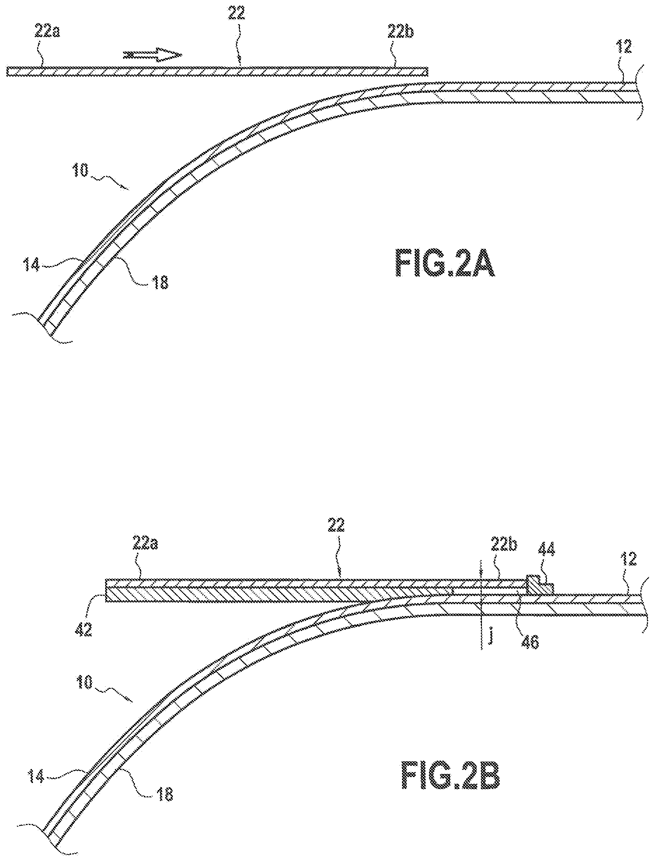

Un mode particulier de mise en œuvre de l'invention pour la réalisation d'une liaison entre une enveloppe de corps de propulseur et une jupette, telles que l'enveloppe 10 et la jupette avant 22 de la figure 1, sera maintenant décrit en référence aux figures 2A à 2D.

L'enveloppe 10 et la jupette 22 sont réalisées séparément. L'enveloppe 10 peut être réalisée par bobinage filamentaire sur un mandrin équipé des embases polaires du corps de propulseur, avec un fil par exemple de carbone pré-imprégné par une résine par exemple époxy, puis par polymérisation de la résine, étant noté que d'autres formes connues de réalisation peuvent être adoptées.

La jupette 22 peut être réalisée en matériau composite ou métallique. Une jupette en matériau composite peut être obtenue par drapage et/ou enroulement filamentaire sur un mandrin de plis ou fils, par exemple en fibres de carbone ou de Kevlar®, imprégnés par une résine par exemple époxy qui est ensuite polymérisée. La jupette 22 présente un diamètre interne supérieur au diamètre externe de la virole 12 de l'enveloppe 10.

La jupette 22 est amenée autour du fond correspondant de l'enveloppe 10, ici le fond avant 14 (figure 2A) puis est positionnée par rapport à l'enveloppe 10 au moyen d'outillages annulaires 42, 44 formés par des couronnes démontables (figure 2B). L'outillage avant 42 s'engage sans jeu dans la partie libre 22a de la jupette 22 afin de positionner radialement la jupette 22 par rapport à l'enveloppe 10 de sorte qu'elles soient sensiblement coaxiales. L'outillage arrière 44 forme une butée pour positionner axialement la jupette 22 par rapport à l'enveloppe 10, Un jeu j est ainsi ménagé entre la partie terminale 22b de la jupette 22 et la virole 12 au voisinage du fond 14. La dimension du jeu j peut varier entre 1 mm et quelques mm en fonction notamment du diamètre du corps de propulseur, par exemple de 2mm à 5mm.

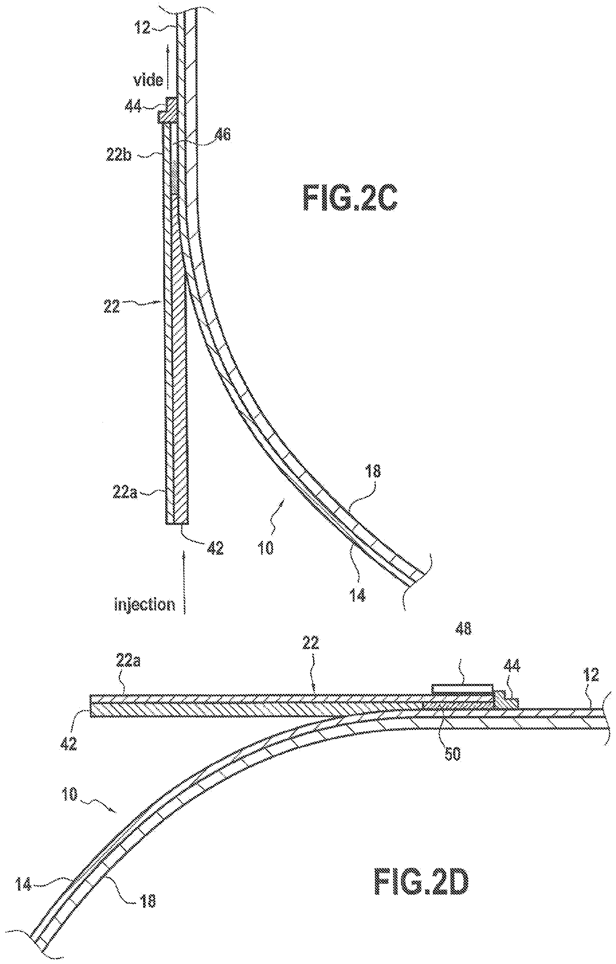

L'outillage avant 42 s'appuie sur le fond 14 et l'outillage arrière 44 s'appuie sur la virole 12 pour fermer un espace annulaire 46 entre la partie terminale 22b de la jupette 22 et l'enveloppe 10 au voisinage du fond 14. La jupette 22 étant maintenue en position par rapport à l'enveloppe 10, un élastomère est injecté dans l'espace 46 (figure 2C), l'axe A étant par exemple sensiblement vertical. L'injection peut être réalisée à travers l'outillage avant 42 dans lequel un ou, de préférence, plusieurs passages (non représentés) sont formés à cet effet. Simultanément, l'espace annulaire 46 est relié à une source de vide à travers un ou, de préférence, plusieurs passages (non représentés) formés dans l'outillage arrière 44. En variante, l'injection peut être réalisée à travers l'outillage arrière v 44 et la liaison avec une source de vide peut être réalisée à travers l'outillage avant 42. L'élastomère peut être choisi par exemple dans les familles des silicones, polyuréthanes et poly-isoprènes.

Dans un autre mode de réalisation, l'injection de l'élastomère peut être effectuée avec l'axe A en position sensiblement horizontale. L'Injection dans l'espace 46 est alors effectuée de préférence à travers plusieurs passages d'injection et l'aspiration à travers plusieurs passages d'aspiration formés à travers les outillages 42 et 44.

Dans ce qui précède, on a envisagé de réaliser l'injection d'élastomère dans l'espace 46 et l'aspiration hors de celui-ci à travers des passages formés dans les outillages 42 et 44. En variante ou en complément, l'injection et l'aspiration peuvent être réalisées à travers des perforations formées dans la partie terminale: 22b de la jupette 22. On peut aussi réaliser l'injection à travers un ou plusieurs passages formés dans l'un au moins des outillages 44 et 46 et l'aspiration à travers une ou plusieurs perforations formées dans la partie terminale 22b de la jupette 22, ou inversement

Lorsque l'espace 46 a été rempli d'élastomère, une réticulation de celui-ci est réalisée. Selon la nature de l'élastomère, la réticulation peut être réalisée à température ambiante ou avec élévation de température, soit si cela est nécessaire, soit si cela est préféré. Dans ce dernier cas, un moufle chauffant annulaire 48 (figure 2D) est amené du côté extérieur de la partie terminale 22b de la jupette 22. On pourrait en variante disposer une ou plusieurs bandes chauffantes autour de la partie terminale 22b de la jupette 22.

On notera qu'une couche d'adhésif, ou de primaire d'adhésion, peut être déposée sur les faces en regard de l'enveloppe 10 et de la partie terminale 22b de la jupette 22, avant positionnement de celle-ci, la réuculation de la couche déposée se produisant lors du traitement thermique de réticulation de l'élastomère,

On obtient ainsi une liaison entre la partie terminale 22b de la jupette et l'enveloppe 10 via une cale d'élastomère 50 formée in-situ, avec contact intime avec la cale d'élastomère sur toute la longueur en direction axiale de la zone de liaison, en dépit de possibles défauts géométriques des pièces liées entre elles. Il en résulte une liaison efficace entre jupette 22 et enveloppe 10 coaxiales sans nécessiter un sur-bobinage sur la face externe de la partie terminale 22b de la jupette 22. La longueur de la zone de liaison en direction axiale peut varier de quelques dizaines de mm à plus de 100 mm, en fonction notamment de la dimension du corps: de propulseur, par exemple entre 50mm et 150mm.

La liaison entre l'enveloppe 10 et une jupette arrière peut être réalisée de façon similaire. Bien entendu, le procédé est utilisable aussi dans le cas où le corps de propulseur est muni d'une seule jupette.

## Revendications

1. Procédé pour relier une partie terminale d'une jupette préfabriquée (22) à une enveloppe (10) d'un corps de propulseur au voisinage d'un fond (14) de celle-ci, la jupette ayant une partie libre (22a) s'étendant à partir de sa partie terminale (22b) pour entourer au moins partiellement ledit fond, le procédé comprenant :
- l'amenée de la partie terminale (22b) de la jupette (22) avec jeu circonférentiel (j) autour de l'enveloppe (10) du corps de propulseur au voisinage dudit fond (14),
- le maintien de la jupette en position par rapport à l'enveloppe du corps de propulseur,
- la fermeture à ses deux extrémités d'un espace annulaire (46) entre la partie terminale (22b) de la jupette (22) et l'enveloppe (10) du corps de propulseur,
- l'injection d'élastomère dans ledit espace annulaire (46), et
- la réticulation de l'élastomère,
**caractérisé en ce qu'**il comprend en outre le positionnement de la jupette (22) par rapport à l'enveloppe (10) du corps de propulseur au moyen d'un premier (42) et d'un deuxième (44) outillages annulaires formés par des couronnes démontables, le premier outillage s'engageant sans jeu dans la partie libre (22a) de la jupette afin de positionner radialement la jupette (22) par rapport à l'enveloppe (10) de sorte qu'elles soient sensiblement coaxiales, le deuxième outillage (44) formant une butée pour positionner axialement la jupette (22) par rapport à l'enveloppe (10), et **en ce que**
le premier outillage (42) s'appuie sur le fond (14) et le deuxième outillage (44) s'appuie sur une virole (12) de l'enveloppe (10) du corps de propulseur pour fermer l'espace annulaire (46) à ses deux extrémités.

2. Procédé selon la revendication 1, dans lequel l'injection d'élastomère est réalisée au moins en partie à travers l'un des outillages (42 ; 44) fermant les extrémités de l'espace annulaire (46).

3. Procédé selon l'une quelconque des revendications 1 et 2, dans lequel l'injection d'élastomère est réalisée au moins en partie à travers la partie terminale (22b) de la jupette (22).

4. Procédé selon l'une quelconque des revendications 1 à 3, dans lequel l'injection d'élastomère est réalisée en reliant l'espace annulaire (46) à une source de vide au moins à travers l'un des outillages (42 ; 44) fermant les extrémités de l'espace annulaire.

5. Procédé selon l'une quelconque des revendications 1 à 4, dans lequel l'injection d'élastomère est réalisée en reliant l'espace annulaire (46) à une source de vide au moins à travers la partie terminale (22b) de la jupette (22).

6. Procédé selon l'une quelconque des revendications 1 à 5, dans lequel l'injection est réalisée en maintenant l'enveloppe (10) du corps de propulseur sensiblement verticale.

7. Procédé selon l'une quelconque des revendications 1 à 5, dans lequel l'injection est réalisée en maintenant l'enveloppe (10) du corps de propulseur sensiblement horizontale.

8. Procédé selon l'une quelconque des revendications 1 à 7, comprenant en outre le dépôt d'adhésif sur des faces en regard de la partie terminale (22b) de la jupette (22) et de l'enveloppe (10) du corps de propulseur, avant injection de l'élastomère.

9. Procédé selon l'une quelconque des revendications 1 à 8 dans lequel la réticulation de l'élastomère est réalisée au moyen d'un élément chauffant (48) disposé du côté extérieur de la partie terminale de la jupette.

## Patentansprüche

1. Verfahren zum Verbinden eines Endteils einer vorgefertigten Schürze (22) mit einem Mantel (10) eines Triebwerkkörpers in der Nähe eines Bodens (14) dessen, wobei die Schürze einen freien Teil (22a) aufweist, der sich von ihrem Endteil (22b) aus erstreckt, um den Boden wenigstens teilweise zu umgeben, wobei das Verfahren umfasst:
- das Bringen des Endteils (22b) der Schürze (22) mit Umfangsspiel (j) um den Mantel (10) des Triebwerkkörpers in der Nähe des Bodens (14) herum,
- das Halten der Schürze in Position in Bezug auf den Mantel des Triebwerkkörpers,
- das Verschließen eines ringförmigen Raums (46) an seinen beiden Enden, zwischen dem Endteil (22b) der Schürze (22) und dem Mantel (10) des Triebwerkkörpers,
- das Einspritzen von Elastomer in den ringförmigen Raum (46) und
- das Vernetzen des Elastomers,
**dadurch gekennzeichnet, dass** es ferner das Positionieren der Schürze (22) gegenüber dem Mantel (10) des Triebwerkkörpers mittels eines ersten (42) und eines zweiten (44) ringförmigen Werkzeugs, die durch abnehmbare Kränze gebildet sind, umfasst, wobei das erste Werkzeug spielfrei in den freien Teil (22a) der Schürze eingreift, um die Schürze (22) gegenüber dem Mantel (10) radial zu positionieren, so dass sie im Wesentlichen koaxial sind, wobei das zweite Werkzeug (44) einen Anschlag bildet, um die Schürze (22) gegenüber dem Mantel (10) axial zu positionieren, und dass
das erste Werkzeug (42) sich an dem Boden (14) abstützt und das zweite Werkzeug (44) sich an einem Ring (12) des Mantels (10) des Triebwerkkörpers abstützt, um den ringförmigen Raum (46) an seinen beiden Enden zu verschließen.

2. Verfahren nach Anspruch 1, bei dem das Einspritzen von Elastomer wenigstens teilweise durch eines der Werkzeuge (42; 44), welches die Enden des ringförmgien Raums (46) verschließt, durchgeführt wird.

3. Verfahren nach einem der Ansprüche 1 und 2, bei dem das Einspritzen von Elastomer wenigstens teilweise durch den Endteil (22b) der Schürze (22) durchgeführt wird.

4. Verfahren nach einem der Ansprüche 1 bis 3, bei dem das Einspritzen von Elastomer dadurch vollzogen wird, dass der ringförmige Raum (46) mit einer Vakuumquelle wenigstens durch eines der Werkzeuge (42; 44), das die Enden des ringförmigen Raums verschließt, verbunden wird.

5. Verfahren nach einem der Ansprüche 1 bis 4, bei dem das Einspritzen von Elastomer dadurch vollzogen wird, dass der ringförmige Raum (46) mit einer Vakuumquelle wenigstens durch den Endteil (22b) der Schürze (22) verbunden wird.

6. Verfahren nach einem der Ansprüche 1 bis 5, bei dem das Einspritzen durchgeführt wird, indem der Mantel (10) des Triebwerkkörpers im Wesentlichen vertikal gehalten wird.

7. Verfahren nach einem der Ansprüche 1 bis 5, bei dem das Einspritzen durchgeführt wird, indem der Mantel (10) des Triebwerkkörpers im Wesentlichen horizontal gehalten wird.

8. Verfahren nach einem der Ansprüche 1 bis 7, ferner umfassend das Aufbringen von Klebstoff auf Flächen, die dem Endteil (22b) der Schürze (22) und dem Mantel (10) des Triebwerkkörpers gegenüberliegen, vor dem Einspritzen des Elastomers.

9. Verfahren nach einem der Ansprüche 1 bis 8, bei dem das Vernetzen des Elastomers mittels eines Heizelements (48) durchgeführt wird, das auf der Außenseite des Endteils der Schürze angeordnet ist.

## Claims

1. A method of connecting a terminal portion of a prefabricated skirt (22) to a casing (10) of a thruster body in the vicinity of an end wall (14) thereof, the skirt having a free portion (22a) extending from its terminal portion (22b) so as to surround said end wall, at least in part, the method comprising:
positioning the terminal portion (22b) of the skirt (22) with circumferential clearance (j) around the casing (10) of the thruster body in the vicinity of said end wall (14);
• keeping the skirt in position relative to the casing of the thruster body;
• closing both ends of an annular space (46) between the terminal portion (22b) of the skirt (22) and the casing (10) of the thruster body;
• injecting elastomer into said annular space (46); and
• curing the elastomer,
**characterized in that** it also comprises positioning the skirt (22) relative to the casing (10) of the thruster body by means of a first annular tooling (42) and a second annular tooling (44) formed by removable rings, the first tooling engaging without clearance in the free portion (22a) of the skirt (22) so as to position the skirt (22) radially relative to the casing (10) in such a manner as to ensure they have substantially the same axis, the second tooling (44) forming an abutment for axially positioning the skirt (22) relative to the casing (10),
and **in that** the first tooling (42) bearing against the end wall (14) and the second tooling (44) bearing against a shroud (12) of the casing (10) of the thruster in order to close both ends of the annular space (46).

2. A method according to claim 1, wherein the elastomer is injected at least in part through tooling (42; 44) closing an end of the annular space (46).

3. A method according to claim 1 or claim 2, wherein the elastomer is injected at least in part through the terminal portion (22b) of the skirt (22).

4. A method according to any one of claims 1 to 3, wherein the elastomer is injected while connecting the annular space (46) to a vacuum source at least through tooling (42; 44) closing an end of the annular space.

5. A method according to any one of claims 1 to 4, wherein the elastomer is injected while connecting the annular space (46) to a vacuum source at least through the terminal portion (22b) of the skirt (22).

6. A method according to any one of claims 1 to 5, wherein the injection is performed while keeping the casing (10) of the thruster body substantially vertical.

7. A method according to any one of claims 1 to 5, wherein the injection is performed while keeping the casing (10) of the thruster body substantially horizontal.

8. A method according to any one of claims 1 to 7, further including depositing adhesive on facing faces of the terminal portion (22b) of the skirt (22) and of the casing (10) of the thruster body, prior to injecting the elastomer.

9. A method according to any one of claims 1 to 8, wherein the elastomer is cured by means of a heater element (48) arranged on the outside of the terminal portion of the skirt.
